# EUROPEAN PATENT APPLICATION

(11) **EP 3 846 113 A1**
(43) Date of publication of application: **07.07.2021**
(21) Application number: 20845556.8
(22) Date of filing: 23.07.2020
(51) Int. Cl.: G06Q 50/00, G06F 9/451, G06F 3/0481

(54) **APPLICATION PROGRAM SHARING METHOD AND APPARATUS, ELECTRONIC DEVICE AND READABLE MEDIUM**

(30) Priority: 17.03.2020 CN 202010187767
(71) Applicant: Baidu Online Network Technology (Beijing) Co., Ltd, Beijing 100085 (CN)
(72) Inventor: LIU, Junqi, Beijing 100085 (CN)
(74) Representative: Canzler & Bergmeier Patentanwälte Partnerschaft mbB
(86) International application number: PCT/CN2020/103726
(87) International publication number: WO 2021/098263

(57) **Abstract**

Provided by the present disclosure is an application sharing method, involving application program promotion, and including: sequentially recording operation interfaces for realizing a function of an application by taking screenshots, and adding an annotation for a user's action in the operation interfaces, when the function of the application is browsed; combining the operation interfaces, the browsed content, and the annotation to generate a function usage example, in response to a function sharing button being triggered; and sharing the function usage example to a sharing platform, to enable another user of the sharing platform to obtain the function usage example. The application sharing method can not only share the operation steps for realizing the function, but also share the content tagged by the user, which enriches the shared content and facilitates the promotion of the application. The present disclosure also provides an application sharing device, an electronic apparatus, and a readable medium.

## Description

### TECHNICAL FIELD

Embodiments of the present disclosure relate to technical fields of computer, Internet, and application program promotion, and particularly to an application sharing method and device, an electronic apparatus and a computer-readable medium.

### BACKGROUND

With the construction of high-speed and stable mobile networks, users can use mobile networks to view high-quality contents such as videos and pictures. In carrier networks, videos and pictures have occupied more than 60% of the traffic, and become the most important business forms. At the same time, competition among various applications (APP) has become increasingly fierce, and APP marketing and promotion methods have been paid more and more attention.

The APP marketing methods mainly include grabbing red envelopes and collecting " 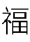 " (which is a Chinese word presenting "good luck") and so on. However, the main purpose of most new users obtained through the marketing method of grabbing red envelopes is to obtain red envelopes, not for a function of the APP itself, and these new users don't even care about the function of the APP at all. Similar to the situation of the marketing method of grabbing red envelopes, the stickiness of the users obtained through the marketing method of collecting " 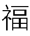 " is not high, resulting in easy loss of new users.

In addition, different marketing channels have different stickiness of new users due to different presentation methods, contents and environments. For example, a new user obtained through a friend chain (e.g., Moments, Groups Chats and Contacts) is usually stickier than a new user obtained through the mass media (e.g. advertisements).

### SUMMARY

According to embodiments of the present disclosure, provided are an application sharing method and device, an electronic apparatus and a computer-readable medium.

In a first aspect, according to embodiments of the present disclosure, provided is an application sharing method, including: sequentially recording operation interfaces for realizing a function of an application by taking screenshots, and adding an annotation for a user's action in the operation interfaces, when the function of the application is browsed; and combining the operation interfaces, the browsed content, and the annotation to generate a function usage example, in response to a function sharing button being triggered.

In some embodiments, the action includes at least one of a click action, a sliding action and an editing action.

In some embodiments, the annotation includes at least one of a textual annotation, a linear annotation and a graphical annotation.

In some embodiments, the function usage example includes a plurality of function representation diagrams, and the plurality of function representation diagrams are based on the operation interfaces as a unit and generated after the operation interfaces, the browsed content and the annotation are combined page by page; or the function usage example includes one function representation diagram generated after the operation interfaces, the browsed content and the annotation are combined.

In some embodiments, after combining the operation interfaces, the browsed content, and the annotation to generate the function usage example, in response to the function sharing button being triggered, the method further includes: compressing the function usage example.

In some embodiments, after combining the operation interfaces, the browsed content, and the annotation to generate the function usage example, in response to the function sharing button being triggered, the method further includes: selecting a sharing platform, wherein the sharing platform is a platform in which the application is currently located or a third-party sharing platform.

In a second aspect, according to embodiments of the present disclosure, provided is an application sharing device, including: a recording module configured to sequentially record operation interfaces for realizing a function of an application by taking screenshots, and add an annotation for a user's action in the operation interfaces, when the function of the application is browsed; and a combination module configured to combine the operation interfaces, the browsed content, and the annotation to generate a function usage example, in response to a function sharing button being triggered.

In some embodiments, the recording module includes: an action recognition unit configured to automatically recognize the user's action, wherein the action includes at least one of a click action, a sliding action and an editing action; and an annotation unit configured to add the annotation for the user's action recognized by the action recognition unit.

In some embodiments, based on the operation interfaces as a unit, the combination module combines the operation interfaces, the browsed content and the annotation page by page, to generate a plurality of function representation diagrams; or the combination module combines the operation interfaces, the browsed content and the annotation, to generate one function representation diagram.

In some embodiments, the device further includes a compression unit configured to compress the function usage example.

In some embodiments, the device further includes: a selecting unit configured to select a sharing platform, wherein the sharing platform is a platform in which the application is currently located or a third-party sharing platform; and a sharing module configured to share the function usage example to the sharing platform, to enable another user of the sharing platform to obtain the function usage example.

In a third aspect, according to embodiments of the present disclosure, provided is an electronic apparatus, including: at least one processor; a memory storing at least one program thereon, wherein when the at least one program is executed by the at least one processor, the at least one processor implements any one of the above-mentioned application sharing methods; and at least one I/O interface, connected between the at least one processor and the memory, and configured to implement information interaction between the at least one processor and the memory.

In a fourth aspect, according to embodiments of the present disclosure, provided is a computer-readable medium storing a computer program thereon, wherein the computer program is executed by a processor to implement any one of the above-mentioned application sharing methods.

According to the application sharing method of the embodiments of the present disclosure, when the function of the application is browsed, the operation interfaces for realizing the function of the application are sequentially recorded by taking screenshots, and the annotation is added for the user's action in the operation interfaces; and the operation interfaces, the browsed content, and the annotation are combined to generate the function usage example, in response to the function sharing button being triggered. By means of tagging the operation interfaces, the application sharing method can not only help users to understand the operation steps for realizing the function of the application, but also obtain the use's comments on the function of the application, which enriches the shared content and helps to increase the value of diversion, and is conducive to the establishment of social relationships and the increase of user stickiness. Further, the function usage example is generated after the function sharing button is triggered, and the function usage example will not be generated when the function sharing button is not triggered, which reduces unnecessary waste of resources of terminals.

### BRIEF DESCRIPTION OF THE DRAWINGS

The accompanying drawings are used to provide a further understanding of embodiments of the present disclosure, and constitute a part of the specification. The drawings, together with the embodiments of the present disclosure, are used to explain the present disclosure, rather than limiting the present disclosure. With the detailed description of exemplary embodiments with reference to the accompanying drawings, the above and other features and advantages will become more apparent to those skilled in the art. The drawings are as follows.
Fig. 1 is a flowchart of an application sharing method according to an embodiment of the present disclosure.
Fig. 2 is a flowchart of an application sharing method according to an embodiment of the present disclosure.
Fig. 3 is another flowchart of an application sharing method according to an embodiment of the present disclosure.
Fig. 4 is yet another flowchart of an application sharing method according to an embodiment of the present disclosure.
Fig. 5 is a functional block diagram of an application sharing device according to an embodiment of the disclosure.
Fig. 6 is a functional block diagram of an annotation module of an application sharing device according to an embodiment of the disclosure.
Fig. 7 is a functional block diagram of a sharing module of an application sharing device according to an embodiment of the disclosure.
Fig. 8 is a block diagram of an electronic apparatus according to an embodiment of the present disclosure.

### DETAILED DESCRIPTION

In order to enable those skilled in the art to better understand the technical solutions of the present disclosure, an application sharing method and device, an electronic apparatus and a computer-readable medium according to the present disclosure will be described in detail below in conjunction with the accompanying drawings.

Although exemplary embodiments will be described in more detail below with reference to the accompanying drawings, the exemplary embodiments can be embodied in various forms, and should not be interpreted as limitation to the present disclosure. Rather, these embodiments are provided for facilitating thorough and complete understanding of the present disclosure, and enabling those skilled in the art to fully understand the scope of the present disclosure.

The embodiments and features in the embodiments can be combined with each other without conflict.

As used herein, the term "and/or" includes any and all combinations of one or more of the related listed items.

The terms used herein are intended to describe specific embodiments, rather than limiting the present disclosure. As used herein, the singular forms "a/an" and "the" are also intended to include the plural forms, unless the context clearly indicated otherwise. It should also be understood that when the terms "include" and/or "made of' are used in the present specification, it specifies the presence of the described features, integers, steps, operations, elements and/or components, but does not exclude the presence or addition of one or more other features, integers, steps, operations, elements, components, and/or combinations thereof.

Unless otherwise defined, the meanings of all terms (including technical and scientific terms) used herein are the same as those commonly understood by those of ordinary skill in the art. It should also be understood that terms such as those defined in commonly used dictionaries should be interpreted as having meanings consistent with their meanings in the related technology and in the background of the present disclosure, and will not be interpreted as having idealized or over formal meanings, unless specifically defined as such herein.

The application sharing method and device according to the embodiments of the present disclosure are mainly aimed at solving the problems that when sharing a function of an application, only the link of the application is shared, i.e., the shared content is single, and it is difficult for a user to obtain the shared application to quickly understand the function of the application, i.e., pain points of users are not solved. In this way, it is not easy to obtain new users, and the obtained users have low stickiness and are easy to lose.

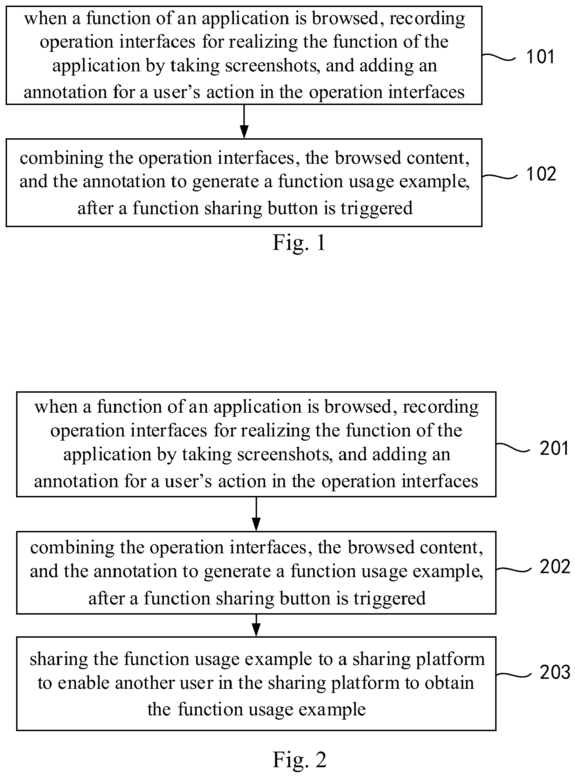

In a first aspect, according to the embodiments of the present disclosure, provided is an application sharing method. Fig. 1 is a flowchart of an application sharing method according to an embodiment of the present disclosure. As shown in Fig. 1, the application sharing method includes the following steps.

In step 101, when a function of an application is browsed, operation interfaces for realizing the function of the application are recorded sequentially by taking screenshots, and an annotation is added for a user's action in the operation interfaces.

The application may be a program that is installed on a terminal to implement a specific function. The terminal may be a mobile terminal, such as a mobile phone, an iPad, etc. The terminal may also be a fixed terminal, such as a computer, etc. The embodiments of the present disclosure do not limit the type of the terminal.

One or more applications may be installed on the terminal, and each application may implement at least one function. When the user uses the application, and he/she is interested in a certain function of the application and wants to share the application to a sharing platform, the application may be shared according to the method of the embodiments of the present disclosure.

In some embodiments, implementing the function of the application may include one operation step, or may include a plurality of operation steps. Therefore, when the user browses the function of the application, the operation steps for realizing the function of the application are recorded. At the same time, for each operation step, the content browsed in the operation step may be tagged, that is, an operation interface corresponding to the operation step is tagged.

The user may tag actively. For example, the user performs editing actions such as underlining or making comments on important content. In some embodiments, the content may be tagged automatically. For example, the user's click action or sliding action is tagged. For another example, when the user browses a certain operation interface and performs a click action at a certain position of the operation interface, the click action is automatically tagged. The clicked position may be a corresponding position showing "Next" or "Check box". The sliding action may be an action performed upon "selecting a specific area in a certain operation interface".

In some embodiments, when the user browses the function of the application, the operation interfaces that realize the function of the application are recorded by taking screenshots, and the annotation is added for the user's action in the operation interfaces, so as to truly show the operation steps that realize the function of the application.

In step 102, the operation interfaces, the browsed content and the annotation are combined to generate a function usage example, after a function sharing button is triggered.

The operation interfaces, the browsed content and the annotation are combined and the function usage example is generated in step 102, i.e., the operation steps for representing the realization of the function of application are generated. Other users of the sharing platform can fully understand all or part of the function of application through the function usage example.

In this embodiment, the combination of the operation interfaces, the browsed content and the annotation is executed after receiving a sharing instruction, that is, the combination is post-set. When the function sharing button is not triggered, the operation interfaces, the browsed content and the annotation will not be combined, which can avoid unnecessary waste of resources of terminals.

In some embodiments, the function usage example may include a plurality of function representation diagrams which are based on the operation interfaces as a unit and generated after the operation interfaces, the browsed content and the annotation are combined page by page.

For example, when the application requires three steps to achieve a certain function and each step corresponds to an operation interface, each operation interface will be screenshotted and thus three function representation diagrams are generated while the user browses the function of the application, and each function representation diagram is added with an annotation. Other users can learn how to enter a next operation interface according to the annotation, and obtain the user's comments on the browsed content in the operation interface. The user's comments may be the user's evaluation of the browsed content, e.g., characteristics of the browsed content in the current operation interface, and the user's own evaluation of these characteristics.

In some embodiments, the function usage example may include one function representation diagram generated after the operation interfaces, the browsed content and the annotation are combined.

For example, when the application requires three steps to achieve a certain function and each step corresponds to an operation interface, each operation interface is screenshotted while the user browses the function of the application, and one function representation diagram is generated when the function sharing button is triggered, that is, three screenshots are merged into a longer function representation diagram.

Fig. 2 is a flowchart of an application sharing method according to an embodiment of the present disclosure. As shown in Fig. 2, the application sharing method includes the following steps.

In step 201, when a function of an application is browsed, operation interfaces for realizing the function of the application are recorded sequentially by taking screenshots, and an annotation is added for a user's action in the operation interfaces.

The application may be a program that is installed on a terminal to implement a specific function. The terminal may be a mobile terminal, such as a mobile phone, an iPad, etc. The terminal may also be a fixed terminal, such as a computer, etc. The embodiments of the present disclosure do not limit the type of the terminal.

One or more applications may be installed on the terminal, and each application may implement at least one function. When the user uses the application, and he/she is interested in a certain function of the application and wants to share the application to a sharing platform, the application may be shared according to the method of the embodiments of the present disclosure.

In some embodiments, implementing the function of the application may include one operation step, or may include a plurality of operation steps. Therefore, when the user browses the function of the application, the operation steps for realizing the function of the application are recorded. At the same time, for each operation step, the content browsed in the operation step may be tagged, that is, an operation interface corresponding to the operation step is tagged.

The user may tag actively. For example, the user performs editing actions such as underlining or making comments on important content. In some embodiments, the content may be tagged automatically. For example, the user's click action or sliding action is marked. For another example, when the user browses a certain operation interface and performs a click action at a certain position of the operation interface, the click action is automatically tagged. The clicked position may be a corresponding position showing "Next" or "Check box". The sliding action may be an action performed upon "selecting a specific area in a certain operation interface".

In some embodiments, when the user browses the function of the application, the operation interfaces that realize the function of the application are recorded by taking screenshots, and the annotation is added for the user's action in the operation interfaces, so as to truly show the operation steps that realize the function of the application.

In step 202, the operation interfaces, the browsed content and the annotation are combined to generate a function usage example, after a function sharing button is triggered.

The operation interfaces, the browsed content and the annotation are combined and the function usage example is generated in step 202, i.e., the operation steps for representing the realization of the function of application are generated. Other users of the sharing platform can fully understand all or part of the function of application through the function usage example.

In this embodiment, the combination of the operation interfaces, the browsed content and the annotation is executed after receiving a sharing instruction; that is, the combination is post-set. When the function sharing button is not triggered, the operation interfaces, the browsed content and the annotation will not be combined, which can avoid unnecessary waste of resources of terminals.

In some embodiments, the function usage example may include a plurality of function representation diagrams which are based on the operation interfaces as a unit and generated after the operation interfaces, the browsed content and the annotation are combined page by page.

For example, when the application requires three steps to achieve a certain function, and each step corresponds to an operation interface, each operation interface will be screenshotted and thus three function representation diagrams while the user browses the function of the application, and each function representation diagram is added with an annotation. Other users can learn how to enter a next operation interface according to the annotation, and obtain the user's comments on the browsed content in the operation interface. The user's comments may be the user's evaluation of the browsed content, e.g., characteristics of the browsed content in the current operation interface, and the user's own evaluation of these characteristics.

In some embodiments, the function usage example may include one function representation diagram generated after the operation interfaces, the browsed content and the annotation are combined.

For example, when the application requires three steps to achieve a certain function, and each step corresponds to an operation interface, each operation interface is screenshotted while the user browses the function of the application, and one function representation diagram is generated when the function sharing button is triggered, that is, three screenshots are merged into a longer function representation diagram.

In step 203, the function usage example is shared to the sharing platform to enable another user of the sharing platform is to obtain the function usage example.

The sharing platform may be a platform on which the application is currently located. For example, if the application developed on a social platform has a new function and the user wishes to share the new function with friends of the social platform, the function of the application can be shared on the social platform. In some embodiments, the sharing platform may also be a third-party sharing platform. For example, if the application does not belong to a social platform and the user wishes to share a certain function of the application on the social platform, the function usage example can be sent to the social platform.

In the embodiments of the present disclosure, the function usage example of the application is shared, and the function usage example not only shows the operation steps for realizing the function, but also shows the actions for realizing the function and the user's feelings about the function. Therefore, the shared content is enriched, so that other users can quickly and comprehensively learn the function of the application, which is conducive to promoting the application and increasing the value of diversion.

In some embodiments, the browsed content, the annotation, and the operation step are combined when the function of the application is browsed, that is, each operation step is combined once. In some other embodiments, the browsed content, the annotation, and the operation steps are combined when the user decides to share the function of the application, that is, the browsed content, the annotation, and the operation steps are combined after the user clicks the sharing button on an operation interface, i.e., the entire combination step is post-set. When the user does not share the function of the application, the browsed content and the annotation are not combined to reduce the waste of resources of terminals.

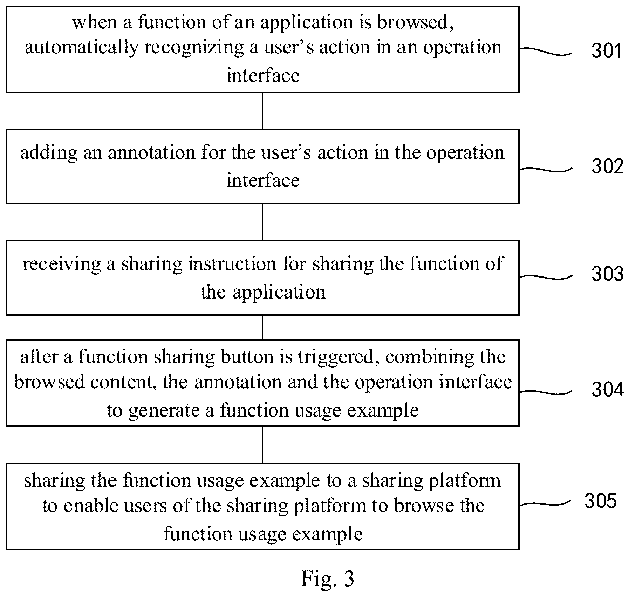

Fig. 3 is another flowchart of an application sharing method according to an embodiment of the present disclosure. As shown in Fig. 3, the application sharing method includes the following steps.

In step 301, when a function of an application is browsed, a user's action in an operation interface is recognized automatically.

The user's action includes, but is not limited to, at least one of a click action, a sliding action and an editing action. A clicked position may be a position where "Next" or "Check box" is displayed in an operation interface. The sliding action may be an action performed upon "selecting a specific area in a certain operation interface". The editing action may be that the user edits the evaluation content of the function.

In some embodiments, when the user browses the function of the application, a system may automatically recognize the user's action, and sequentially record interaction points between the user and the operation interfaces of the function of the application by taking screenshots, such as button click operations and other actions.

In step 302, an annotation is added for the user's action in the operation interface.

The annotation includes one or more of a textual annotation and an icon annotation. The textual annotation may be in a form of bubble prompts or other forms. The icon annotation includes one or more of a linear annotation and a graphical annotation. A line of the linear annotation may be straight, wavy, or circular. A pattern of the graphical annotation may be set or selected according to user preferences.

In some embodiments, a screenshot is taken for each operation interface that implements the function of the application, and then the annotation is added for the browsed content in the screenshot.

For example, if the user clicks a button "Y" on a browsed page, the system only takes a screenshot of the clicked page, and adds an annotation on a position of the button "Y" by using an icon, such as circling the button "Y" with a red circle. When sharing the application, the system automatically combines the screenshot of the browsed page and the annotation, and then shares it to a sharing platform.

For another example, when the user browses the function of the application, the system takes a screenshot of a homepage of the application, and the user adds annotations on positions of XI, X2 and X3 in an operation interface, such as tagging with a red line at XI, a comment at X2, and an icon at X3. When sharing the function of the application, the system automatically combines the homepage screenshot and the three annotations to obtain a function usage example, and then share the function usage example to a sharing platform.

In some embodiments, when the user browses the function of the application, the user may also tag a scope of the user's browsing, such as selecting the content of a certain area in an operation interface. When sharing, the browsed content and the annotation are combined into a function usage example, and then the function usage example is shared to a sharing platform.

In some embodiments, if the user wishes to share the currently browsed content, the currently browsed content may be analyzed and edited through a content analysis module. When sharing, the edited content and the browsed content are combined and then shared to a sharing platform. In some embodiments, when editing content, the browsed content may be directly copied to a clipboard and then edited in the clipboard.

In step 303, a sharing instruction for sharing the function of the application is received.

The sharing instruction of the application may be set at the end of the application, i.e., the last operation interface of the application.

In some embodiments, the sharing instruction of the application may be called through some operation actions. When the user wishes to share the application with friends, the user can share the function of the application by clicking the sharing instruction.

In step 304, after a function sharing button is triggered, the browsed content, the annotation and the operation interface are combined to generate a function usage example.

In the embodiments of the present disclosure, after receiving the sharing instruction, the system combines the operation interface, the browsed content, and the annotation to obtain an annotated application, that is, to generate a function usage example.

In this embodiment, the combination of the operation interface, the browsed content, and the annotation is executed after receiving the sharing instruction, that is, the combination is post-set. When the function sharing button is not triggered, the operation interface, the browsed content and the annotation will not be combined, so as to avoid waste of resources of terminals.

In step 305, the function usage example is shared to a sharing platform to enable users of the sharing platform to browse the function usage example.

It is easy to understand that the sharing platform can share the user's function usage example with other users, which can truly reproduce the function usage scenarios and enrich the content of function sharing.

In some embodiments, when the function of the application is shared to the sharing platform, the function of application may be shared by a long graph, that is, the content browsed by the user and the annotation are made into a long graph, and then shared to the sharing platform. Alternatively, when the function of the application is shared to the sharing platform, the function of application may be shared by a plurality of graphs, that is, the content browsed by the user and the annotation are made into the plurality of graphs, and then shared to the sharing platform.

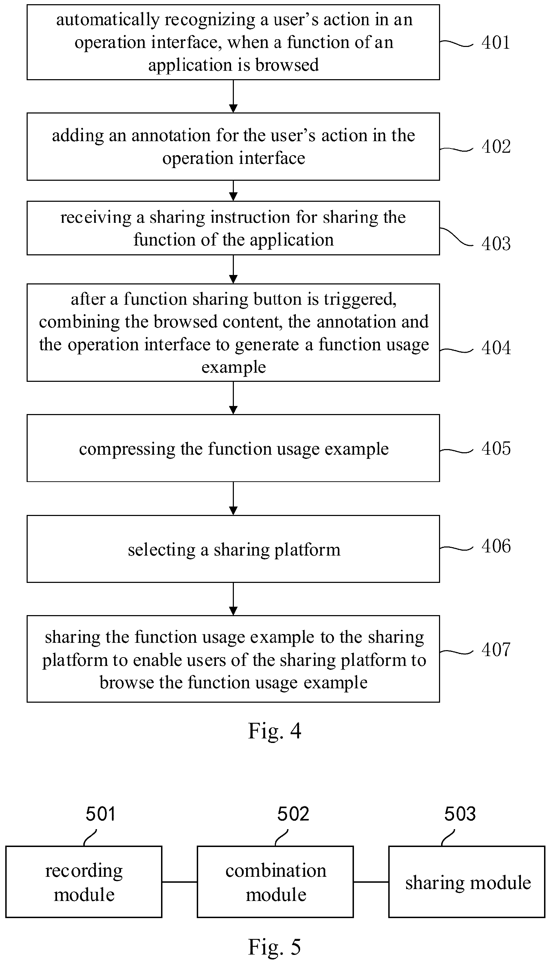

Fig. 4 is yet another flowchart of an application sharing method according to an embodiment of the present disclosure. As shown in Fig. 4, the application sharing method includes the following steps.

In step 401, a user's action in an operation interface is recognized automatically when a function of an application is browsed.

In step 401, when the user browses the function of the application, the user's action in each operation interface is automatically recognized.

The user's action includes at least one of a click action, a sliding action and an editing action. A clicked position may be a position where "Next" or "Check box" is displayed in an operation interface. The sliding action may be an action performed upon "selecting a specific area in a certain operation interface". The editing action may be that the user edits the evaluation content of the function.

In some embodiments, when the user browses the application, a system may automatically recognize the user's actions, and sequentially record interaction points between the user and the application, such as button click operations and other actions.

In step 402, an annotation is added for the user's action in the operation interface.

The annotation includes one or more of a textual annotation and an icon annotation. The textual annotation may be in a form of bubble prompts or other forms. The icon annotation includes one or more of a linear annotation and a graphical annotation. A line of the linear annotation may be straight, wavy, or circular. A pattern of the graphical annotation may be set or selected according to user preferences.

In some embodiments, a screenshot is taken for a homepage or each operation interface of the application, and then content in the screenshot is tagged and the tagged content includes, but is not limited to, actions.

For example, if the user clicks a button "Y" on a browsed page, the system only takes a screenshot of the clicked page, and adds an annotation on a position of the button "Y" by using an icon, such as circling the button "Y" with a red circle. When sharing the application, the system automatically combines the screenshot and the annotation, and then shares it to a sharing platform.

For another example, when the user browses the function of the application, the system takes a screenshot of the homepage of the application, and the user adds annotations on positions of XI, X2 and X3 in an operation interface, such as tagging with a red line at X1, a comment at X2, and an icon at X3. When sharing the function of the application, the system automatically combines the homepage screenshot and the three annotations to obtain a function usage example, and then share the function usage example to a sharing platform.

In some embodiments, when the user browses the function of the application, the user may also tag a scope of the user's browsing, such as selecting the content of a certain area in an operation interface. When sharing, the browsed content and the annotation are combined into a function usage example, and then the function usage example is shared to a sharing platform.

In some embodiments, if the user wishes to share the currently browsed content, the currently browsed content may be analyzed and edited through a content analysis module. When sharing, the edited content and the browsed content are combined and then shared to a sharing platform. In some embodiments, when editing content, the browsed content may be directly copied to a clipboard and then edited in the clipboard.

In step 403, a sharing instruction for sharing the function of the application is received.

The sharing instruction of the application may be set at the end of the application, i.e., the last operation interface of the application.

In some embodiments, the sharing instruction of the application may be called through some operation actions. When the user wishes to share the application with friends, the user can share the function of the application by clicking the sharing instruction.

In step 404, after a function sharing button is triggered, the browsed content, the annotation and the operation interface are combined to generate a function usage example.

After receiving the sharing instruction, the system combines the operation interface, the browsed content, and the annotation to obtain an annotated application, that is, to generate a function usage example.

In this embodiment, the combination of the operation interface, the browsed content, and the annotation is executed after receiving the sharing instruction, that is, the combination is post-set. When the function sharing button is not triggered, the operation interface, the browsed content and the annotation will not be combined, which can avoid unnecessary waste of resources of terminals.

In step 405, the function usage example is compressed.

That compress the function usage example can reduce the system resources and network transmission resources occupied by sharing content, and can increase the rate of sharing.

In step 406, a sharing platform is selected.

In some embodiments, the user can select one sharing platform or a plurality of sharing platforms to share. The sharing platform can be selected according to user preferences.

The sharing platform may be the platform on which the application itself is located. For example, if the application developed on a certain social platform has a new function and the user wishes to share the new function with friends of the social platform, the function of the application can be shared on the social platform. In some embodiments, the sharing platform may also be a third-party sharing platform. For example, if the application does not belong to a social platform and the user wishes to share a certain function of the application on the social platform, the function usage example can be sent to the social platform.

In step 407, the function usage example is shared to the sharing platform to enable users of the sharing platform to browse the function usage example.

It is easy to understand that the sharing platform can share the user's function usage example, which can truly reproduce the function usage scenarios and enrich the content of function sharing.

In some embodiments, when the function of the application is shared on the sharing platform, the function of application may be shared by a long graph, that is, the content browsed by the user and the annotation are made into a long graph, and then shared to the sharing platform. Alternatively, when the function of the application is shared to the sharing platform, the function of application may be shared by a plurality of graphs, that is, the content browsed by the user and the annotation are made into the plurality of graphs, and then shared to the sharing platform.

According to the application sharing method of the embodiments of the present disclosure, when the function of the application is browsed, the operation interfaces for realizing the function of the application are sequentially recorded by taking screenshots, and the annotation is added for the user's action in the operation interfaces; the operation interfaces, the browsed content, and the annotation are combined to generate the function usage example, in response to the function sharing button being triggered; and the function usage example is shared to the sharing platform, so that another user of the sharing platform is capable of obtaining the function usage example. By means of tagging the operation interfaces, the application sharing method can not only help users to understand the operation steps for realizing the function of the application, but also obtain the use's comments on the function of the application, which enriches the shared content and helps to increase the value of diversion, and is conducive to the establishment of social relationships and the increase of user stickiness.

Further, the function usage example is generated after the function sharing button is triggered, and the function usage example will not be generated when the function sharing button is not triggered, which reduces unnecessary waste of resources of terminals.

In addition, according to the application sharing method of the embodiments of the present disclosure, the operation steps for realizing the function of the application are recorded by taking screenshots, and the generated function usage example is in the form of diagrams. Compared with a function display example obtained by a screen recording method, the generated function usage example occupies less storage space and transmission resources, and the content shared is easier to be accepted by users.

In a second aspect, according to the embodiments of the present disclosure, provided is an application sharing device. Fig. 5 is a functional block diagram of an application sharing device according to an embodiment of the disclosure. As shown in Fig. 5, the application sharing device includes the following modules.

A recording module 501 is configured to sequentially record operation interfaces for realizing a function of the application by taking screenshots and add an annotation for a user's action in the operation interfaces when the function of the application is browsed.

The user may tag actively, such as underlining or making comments on important content. In some embodiments, the tagging action may be automatically completed by the application, such as automatically recording a specific location of a browsed page clicked by the user, or the page browsed by the user.

In some embodiments, when the user browses the application, the process of the user browsing the application program is recorded through annotations, so as to show a real function usage scenario.

A combination module 502 is configured to combine the operation interfaces, the browsed content, and the annotation to generate a function usage example, after a function sharing button is triggered.

In this embodiment, the combination of the operation interfaces, the browsed content and the annotation is executed after receiving a sharing instruction, that is, the combination is post-set. When the function sharing button is not triggered, the operation interfaces, the browsed content and the annotation will not be combined, which can avoid unnecessary waste of resources of terminals.

Based on the operation interfaces as a unit, the combination module 502 combines the operation interfaces, the browsed content and the annotation page by page, to generate a plurality of function representation diagrams.

For example, when the application requires three steps to achieve a certain function, and each step corresponds to an operation interface, each operation interface will be screenshotted and thus three function representation diagrams are generated while the user browses the function of the application, and each function representation diagram is added with an annotation. Other users can learn how to enter a next operation interface according to the annotation, and obtain the user's comments on the browsed content in the operation interface. The user's comments may be the user's evaluation of the browsed content, e.g., characteristics of the browsed content in the current operation interface, and the user's own evaluation of these characteristics.

In some embodiments, the combination module combines the operation interfaces, the browsed content and the annotation to generate one function representation diagram.

For example, when the application requires three steps to achieve a certain function and each step corresponds to an operation interface, each operation interface is screenshotted while the user browses the function of the application, and one function representation diagram is generated when the function sharing button is triggered, that is, three screenshots are merged into a longer function representation diagram.

In some embodiments, the application sharing device may further include: a sharing module 503 configured to share the function usage example to a sharing platform to enable another user of the sharing platform is to obtain the function usage example.

The sharing platform may be a platform on which the application is currently located. For example, if the application developed on a social platform has a new function and the user wishes to share the new function with friends of the social platform, the function of the application can be shared on the social platform. In some embodiments, the sharing platform may also be a third-party sharing platform. For example, if the application does not belong to a social platform and the user wishes to share a certain function of the application on the social platform, the function usage example can be sent to the social platform.

In the embodiments of the present disclosure, the function usage example of the application is shared, and the function usage example not only shows the operation steps for realizing the function, but also shows the actions for realizing the function and the user's feelings about the function. Therefore, the shared content is enriched, so that other users can quickly and comprehensively learn the function of the application, which is conducive to promoting the application and increasing the value of diversion.

It should be noted that the browsed content and the annotation are not combined at random during the browsing process, but are combined after receiving a sharing instruction, that is, the entire combination step is post-set. When the user does not share the function of the application, there is no need to combine the browsed content and the annotation.

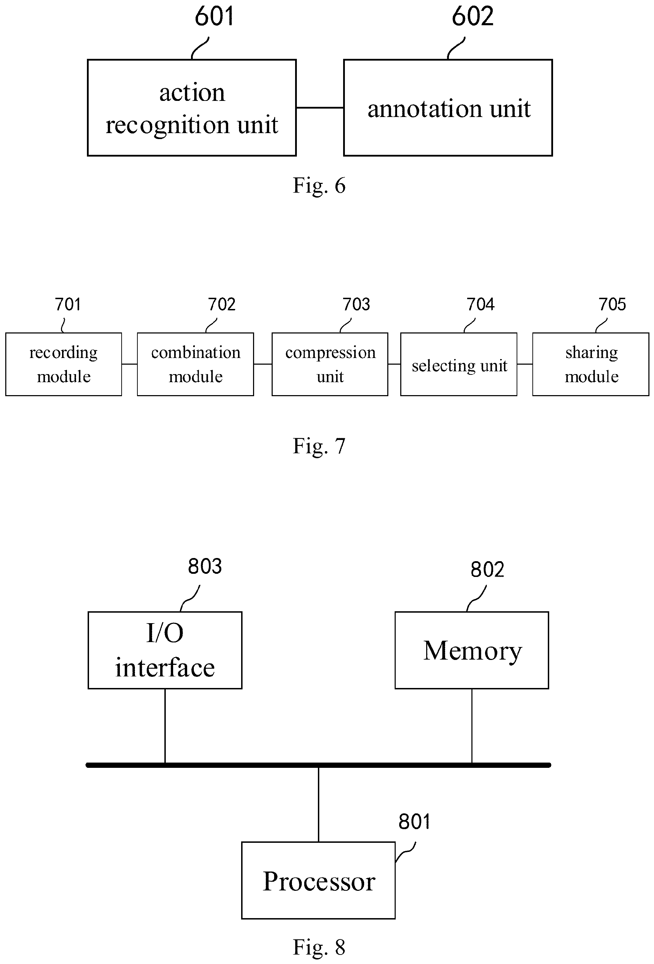

In some embodiments, as shown in Fig. 6, the recording module includes an action recognition unit 601 and an annotation unit 602.

The action recognition unit 601 is configured to automatically recognize the user's action.

When the application is browsed, the user's action is recognized automatically. The action includes at least one of a click action, a sliding action and an editing action.

In some embodiments, when the user browses the application, a system may automatically recognize the user's action, and record interaction points between the user and the application, such as button click operations and other actions. These interaction points may be used as tagged content.

The annotation unit 602 is configured to add the annotation for the user's action at the browsed content.

The annotation includes one or more of a textual annotation and an icon annotation. The textual annotation may be in a form of bubble prompts or other forms. The icon annotation includes one or more of a linear annotation and a graphical annotation. A line of the linear annotation may be straight, wavy, or circular. A pattern of the graphical annotation may be set or selected according to user preferences.

In some embodiments, a screenshot is taken for each operation interface that implements the function of the application, and then the annotation is added for the browsed content in the screenshot.

In some embodiments, a screenshot is taken for a homepage or each operation interface of the application, and then the user's action is tagged at the browsed content in the screenshot.

In some embodiments, a screenshot is taken for an operation interface on which the browsed content is located, and then the user's action is tagged on the operation interface.

In some embodiments, as shown in Fig. 7, the application sharing device includes a recording module 701, a combination module 702, a compression unit 703 and a sharing module 705.

The recording module 701, the combination module 702 and the sharing module 706 have the same functions as the recording module 501, the combination module 502, and the sharing module 503 respectively, and their descriptions will not be repeated herein.

The compression unit 703 is configured to compress the function usage example, i.e., to compress the browsed content, the annotation, and the operation steps to generate a compressed function usage example.

That compress the function use example can reduce the occupation of system resources and network transmission resources, and can increase the rate of sharing.

In some embodiments, the application sharing device further includes a selecting unit 704, and the selecting unit 704 is configured to select the sharing platform.

The sharing platform may be a platform on which the user is currently located. For example, if the application developed on a social platform has a new function and the user wishes to share the new function with friends of the social platform, the function of the application can be shared on the social platform. In some embodiments, the sharing platform may also be a third-party sharing platform. For example, if the application does not belong to a social platform and the user wishes to share a certain function of the application on the social platform, the function usage example can be sent to the social platform.

In some embodiments, the application sharing device further includes a receiving module configured to receive a trigger instruction for sharing the application. When the user wishes to share the application with friends, follow-up operations may be performed by clicking the sharing instruction.

According to the application sharing device of the embodiments of the present disclosure, when the function of the application is browsed, the recording module sequentially records operation interfaces for realizing the function of the application by taking screenshots, and adds the annotation for the user's action in the operation interfaces; the combination module combines the operation interfaces, the browsed content, and the annotation to generate the function usage example, in response to the function sharing button being triggered; and the sharing module is configured to share the function usage example to the sharing platform to enable another user of the sharing platform is to obtain the function usage example. By means of tagging the operation interfaces, the application sharing device can not only help users to understand the operation steps for realizing the function of the application, but also obtain the use's comments on the function of the application, which enriches the shared content and helps to increase the value of diversion, and is conducive to the establishment of social relationships and the increase of user stickiness. Further, the function usage example is generated after the function sharing button is triggered, and the function usage example will not be generated when the function sharing button is not triggered, which reduces unnecessary waste of resources of terminals.

In a third aspect, referring to Fig. 8, according to the embodiments of the present disclosure, provided is an electronic apparatus including: at least one processor 801; a memory 802 storing at least one program thereon, wherein when the at least one program is executed by the at least one processor, the at least one processor implements any one of the above-mentioned application sharing methods; and at least one I/O interface 803 connected between the at least one processor and the memory, and configured to implement information interaction between the at least one processor and the memory.

The processor 801 is a device having a data processing capability, and includes, but is not limited to, a central processing unit (CPU) and the like. The memory 802 is a device having a data storage capability, and includes, but is not limited to, a random access memory (RAM, more specifically, such as a synchronous dynamic RAM (SDRAM), a double data rate SDRAM (DDR SDRAM), etc.), a read only memory (ROM), an electrically erasable programmable read only memory (EEPROM), and a flash memory (FLASH). The I/O interface (read/write interface) 803 is connected between the processor 801 and the memory 802, enables the information interaction between the processor 801 and the memory 802, and includes, but is not limited to, a data bus etc.

In some embodiments, the processor 801, the memory 802, and the I/O interface 803 are connected to each other through a bus, so as to be further connected to the other components of the computing equipment.

In a fourth aspect, according to the embodiments of the present disclosure, provided is a computer-readable medium storing a computer program thereon. When the computer program is executed by a processor, any one of the above-mentioned application sharing methods is implemented.

It should be understood by those of ordinary skill in the art that the functional modules/units in all or some of the steps, systems, and devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or step may be performed through cooperation of several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those of ordinary skill in the art, the term "computer storage media" includes volatile/nonvolatile and removable/non-removable media used in any method or technology for storing information (such as computer-readable instructions, data structures, program modules and other data). The computer storage media include, but are not limited to, RAM, ROM, EEPROM, flash memory or other memory techniques, CD-ROM, digital versatile disk (DVD) or other optical discs, magnetic cassette, magnetic tape, magnetic disk or other magnetic storage devices, or any other media which can be used to store the desired information and can be accessed by a computer. In addition, it is well known by those of ordinary skill in the art that the communication media generally include computer-readable instructions, data structures, program modules or other data in a modulated data signal, such as a carrier wave or other transmission mechanism, and may include any information delivery media.

It should be understood that both the exemplary embodiments and the specific terms disclosed in the present disclosure are for the purpose of illustration, rather than for limiting the present disclosure. It is obvious to those skilled in the art that the features, characteristics and/or elements described in connection with a particular embodiment may be used alone or in combination with the features, characteristics and/or elements described in connection with other embodiments, unless expressly indicated otherwise. Therefore, it should be understood by those skilled in the art that various changes in form and detail may be made without departing from the scope of the present disclosure as set forth in the appended claims.

## Claims

1. An application sharing method, comprising:
sequentially recording operation interfaces for realizing a function of an application by taking screenshots, and adding an annotation for a user's action in the operation interfaces, when the function of the application is browsed; and
combining the operation interfaces, the browsed content, and the annotation to generate a function usage example, in response to a function sharing button being triggered.

2. The method according to claim 1, wherein the action comprises at least one of a click action, a sliding action and an editing action.

3. The method according to claim 2, wherein the annotation comprises at least one of a textual annotation, a linear annotation and a graphical annotation.

4. The method according to claim 1, wherein
the function usage example comprises a plurality of function representation diagrams, wherein the plurality of function representation diagrams are based on the operation interfaces as a unit and generated after the operation interfaces, the browsed content and the annotation are combined page by page; or
the function usage example comprises one function representation diagram generated after the operation interfaces, the browsed content and the annotation are combined.

5. The method according to claim 1, after combining the operation interfaces, the browsed content, and the annotation to generate the function usage example, in response to the function sharing button being triggered, further comprising:
compressing the function usage example.

6. The method according to claim 1, after combining the operation interfaces, the browsed content, and the annotation to generate the function usage example, in response to the function sharing button being triggered, further comprising:
selecting a sharing platform, wherein the sharing platform is a platform in which the application is currently located or a third-party sharing platform; and
sharing the function usage example to the sharing platform, to enable another user of the sharing platform to obtain the function usage example.

7. An application sharing device, comprising:
a recording module configured to sequentially record operation interfaces for realizing a function of an application by taking screenshots, and add an annotation for a user's action in the operation interfaces, when the function of the application is browsed; and
a combination module configured to combine the operation interfaces, the browsed content, and the annotation to generate a function usage example, in response to a function sharing button being triggered.

8. The device according to claim 7, wherein the recording module comprises:
an action recognition unit configured to automatically recognize the user's action, wherein the action comprises at least one of a click action, a sliding action and an editing action; and
an annotation unit configured to add the annotation for the user's action recognized by the action recognition unit.

9. The device according to claim 7, wherein
based on the operation interfaces as a unit, the combination module combines the operation interfaces, the browsed content and the annotation page by page, to generate a plurality of function representation diagrams; or
the combination module combines the operation interfaces, the browsed content and the annotation, to generate one function representation diagram.

10. The device according to claim 7, further comprising:
a compression unit configured to compress the function usage example.

11. The device according to claim 7, further comprising:
a selecting unit configured to select a sharing platform, wherein the sharing platform is a platform in which the application is currently located or a third-party sharing platform; and
a sharing module configured to share the function usage example to the sharing platform, to enable another user of the sharing platform to obtain the function usage example.

12. An electronic apparatus, comprising:
at least one processor;
a memory storing at least one program thereon, wherein when the at least one program is executed by the at least one processor, the at least one processor implements the method according to any one of claims 1-6; and
at least one I/O interface connected between the at least one processor and the memory, and configured to implement information interaction between the at least one processor and the memory.

13. A computer-readable medium storing a computer program thereon, wherein the computer program is executed by a processor to implement the method according to any one of claims 1-6.
